# EUROPÄISCHE PATENTSCHRIFT

(11) **EP 3 157 784 B1**
(45) Veröffentlichungstag und Bekanntmachung des Hinweises auf die Patenterteilung: **23.05.2018**
(21) Anmeldenummer: 15727963.9
(22) Anmeldetag: 08.06.2015
(51) Int. Cl.: B60R 16/023, H04B 5/00, G01D 11/24, G01D 11/30

(54) **SYSTEM ZUM ÜBERTRAGEN EINER INFORMATION ZU EINER TEILEINHEIT**
SYSTEM FOR TRANSMITTING INFORMATION TO A SUBUNIT
SYSTÈME DE TRANSFERT D'UNE INFORMATION À UNE UNITÉ PARTIELLE

(30) Priorität: 18.06.2014 DE 102014211705
(43) Veröffentlichungstag der Anmeldung: 26.04.2017
(73) Patentinhaber: Robert Bosch GmbH, 70442 Stuttgart (DE)
(72) Erfinder: MATHONY, Hans-Joerg, 71732 Tamm-Hohenstange (DE); ISKE, Burkhard, Suzhou Jiangsu 215021 (CN); IRION, Albrecht, 70563 Stuttgart (DE); HANSEN, Maik, 71229 Leonberg (DE); SCHNEIDER, Marcus, 71642 Ludwigsburg (DE); SCHUMANN, Michael, 70597 Stuttgart (DE)
(86) Internationale Anmeldenummer: PCT/EP2015/062639
(87) Internationale Veröffentlichungsnummer: WO 2015/193130

(56) Entgegenhaltungen:
- WO-A1-03/055726
- DE-A1- 19 815 843
- DE-A1- 19 945 337
- JP-A- 2009 224 187
- US-A1- 2009 183 558
- US-A1- 2011 021 930

## Beschreibung

### Stand der Technik

Die Erfindung betrifft ein System zum Übertragen einer Information zu einer Teileinheit umfassend mindestens eine Anschlussposition und mindestens eine Teileinheit, wobei die Anschlussposition zur Aufnahme der Teileinheit eingerichtet ist. Des Weiteren betrifft die Erfindung ein Fahrzeug, welches ein solches System umfasst.

Die Erfindung betrifft auch ein Fahrzeug mit einem derartigen System, sowie Teileinheiten und Anschlusspositionen zur Verwendung in einem derartigen System.

Die ansteigende Verkehrsdichte bei Kraftfahrzeugen führt immer häufiger zu kritischen Fahrsituationen. Daher sind moderne Fahrzeuge mit einer Vielzahl von Assistenzsystemen ausgestattet, die den Fahrer bei der Führung des Kraftfahrzeugs unterstützen. Diese Assistenzsysteme wiederum sind für ihr Funktionieren auf eine Vielzahl von Sensoren angewiesen, die das Umfeld des Fahrzeugs umfassen. Dabei stellt sich das Problem, dass jeder einzelne Sensor für die Datenauswertung mit einem Steuergerät verbunden werden muss und das Steuergerät zu jedem Sensor eindeutig dessen Einbauposition kennen muss, um die die Daten richtig zuzuordnen. Zur Reduktion der Komplexität der Verkabelung zwischen den Sensoren und dem Steuergerät werden Datenbusse verwendet, so dass an einem Kabelstrang eine Vielzahl von Sensoren angeschlossen werden können. Eine einfache Zuordnung zwischen Einbauposition eines Sensors und der dem Sensor zugeordneten Datenleitung ist jedoch nicht mehr gegeben, es kommen nun für einen an den Datenbus angeschlossenen Sensor grundsätzlich mehrere mögliche Einbaupositionen in Betracht.

Aus DE 199 45 337 A1 ist ein System zum Übertragen von Daten zwischen Teileinheiten und einer Steuerungseinheit bekannt. Den einzelnen Teileinheiten sind Mikroschalter zugeordnet, wobei die Funktion der Teileinheiten über die Stellung der Mikroschalter eingestellt wird. Beim Einbau einer Teileinheit werden die Mikroschalter gegen eine Einbauwand gedrückt, an der sich entsprechende Stifte befinden, die dem Mikroschalter einen Widerstand entgegensetzen. Die Stellungen der Mikroschalter geben den Teileinheiten des Weiteren eine Adresse an, die in einer Datenstruktur bei der Kommunikation über einen Bus als Identifizierungs-Bits verwendet werden.

Die im Fahrzeugumfeld verwendeten Sensoren sind häufig ohne weitere Schutzmaßnahmen Umwelteinflüssen wie Feuchtigkeit, Ölen, Salzen usw. ausgesetzt. Es ist daher wünschenswert ein System bereitzustellen, mit dem eine Kodierung an einen Sensor übertragen werden kann, das resistent gegen Umwelteinflüsse ist und ohne zusätzliche elektrische Kontakte auskommt.

### Offenbarung der Erfindung

Es wird ein System zum Übertragen einer Information zu einer Teileinheit vorgeschlagen, umfassend mindestens eine Anschlussposition und mindestens eine Teileinheit, wobei die Anschlussposition zur Aufnahme der Teileinheit eingerichtet ist, und wobei die Anschlussposition mindestens eine Kodiernase umfasst, die eingerichtet ist, in eine entsprechende Ausnehmung an der Teileinheit einzugreifen, wobei deren Anordnung die zu übertragene Information kodiert, und wobei die Teileinheit mindestens eine Ausnehmung aufweist, die Mittel umfasst, um die Anwesenheit der Kodiernase in der Ausnehmung berührungslos zu erfassen.

Das System ist beispielsweise in einem Kraftfahrzeug installiert, wobei das System an verschiedenen Stellen des Kraftfahrzeugs Anschlusspositionen umfasst. Bevorzugt handelt es sich bei den Teileinheiten um Sensoren zur Erfassung des Umfelds eines Fahrzeugs und die Anschlusspositionen sind bevorzugt als Halterungen für die Sensoren ausgeführt. Die Sensoren sind beispielsweise als Ultraschallsensoren, Radarsensoren, Lidarsensoren oder dergleichen ausgeführt. Beispielsweise umfasst das System zwischen einer und 50 Anschlusspositionen.

Für den Betrieb der Teileinheiten ist in der Regel eine Stromversorgung sowie eine Datenverbindung zu einem Steuergerät erforderlich. Hierfür sind an den Anschlusspositionen entsprechende Mittel zu Herstellung einer elektrischen Verbindung vorgesehen. Da die Anschlusspositionen üblicherweise Umwelteinflüssen wie Feuchtigkeit, Ölen und Salzen ausgesetzt sind, die elektrische Kontakte korrodieren lassen, müssen diese Kontakte zum einen entsprechend ausgerüstet sein, zum anderen ist es wünschenswert, die Anzahl der Kontakte zu reduzieren. Daher ist erfindungsgemäß vorgesehen, zum Übertragen einer Information zu einer Teileinheit keine weiteren elektrischen Kontakte anzuordnen, sondern an den Anschlusspositionen Kodiernasen vorzusehen, die eingerichtet sind, in an den Teileinheiten befindliche Ausnehmungen einzugreifen. Die Teileinheiten umfassen dazu mindestens eine Ausnehmung, in der Regel umfassen diese mindestens zwei Ausnehmungen, wobei die Information durch das Vorhandensein bzw. Nichtvorhandensein einer Kodiernase erfolgt. Beispielsweise kann das Vorhandensein einer Kodiernase als logische 1 und das Nichtvorhandensein einer Kodiernase als logische 0 gewertet werden. Mit zwei Kodiernasen lassen sich somit bereits vier Zustände kennzeichnen, mit drei Kodiernasen acht mögliche Zustände usw..

In weiteren Ausführungsformen kann vorgesehen sein, nicht nur das Vorhandensein bzw. Nichtvorhandensein einer Kodiernase festzustellen, sondern auch eine Höhe der Kodiernase zu erfassen bzw. zu erfassen, wie weit eine Kodiernase in die Ausnehmung eingreift. In diesem Fall lassen sich mit einer Kodiernase mehr als zwei mögliche Zustände kodieren. Werden beispielsweise Kodiernasen mit drei verschiedenen Höhen eingesetzt, so kann eine Kodiernase insgesamt vier verschiedene Zustände kennzeichnen, nämlich drei den verschiedenen Höhen zugeordneten Zustände sowie der Zustand, dass keine Kodiernase vorhanden ist.

Die jeweiligen Teileinheiten erkennen das Vorhandensein bzw. Nichtvorhandensein einer Kodiernase in einer Ausnehmung berührungslos. Da keine elektrischen Kontakte für das Erkennen einer Kodiernase nach außen geführt werden müssen, kann das Gehäuse der Teileinheit geschlossen ausgeführt werden, was die Widerstandsfähigkeit des Systems gegenüber Umwelteinflüssen verbessert.

Die Teileinheiten umfassen Mittel, mit denen diese die Anwesenheit einer Kodiernase in einer ihrer Ausnehmungen kapazitiv, induktiv oder magnetisch erfassen. Diese Mittel sind im Inneren der Teileinheit vorgesehen. Die Mittel sind beispielsweise bei einer magnetischen Erkennung als Magnetsensor, beispielsweise als Hall-Effekt-Sensor ausgestaltet. Im Fall einer kapazitiven oder induktiven Messung können diese Mittel in Form von einer um die Ausnehmung herumgeführten Leiterschleife umfassen.

Mit Hilfe dieser Leiterschleife kann eine Kapazität oder eine Impedanz gemessen werden. Die gemessene Kapazität bzw. Impedanz ist davon abhängig, ob sich ein Gegenstand in der Ausnehmung befindet. Greift demnach nach dem Einbau einer Teileinheit in eine Ausnehmung einer Anschlussposition eine Kodiernase ein, dann ändern sich die elektrischen Eigenschaften, die dann über eine Kapazitätsänderung oder Impedanzänderung erkannt werden.

Eine solche Änderung der Kapazität bzw. Impedanz findet statt, egal aus welchem Material die Kodiernase gefertigt ist. Beispielsweise können in einer Variante der Erfindung, bei der die Anschlusspositionen als Halterungen für Sensoren ausgeführt sind, die Kodiernasen aus dem gleichen Material wie die Halterungen gefertigt werden.

In weiteren Ausführungsformen kann für eine vereinfachte Erkennung einer Kodiernase diese zusätzlich metallisch oder magnetisch ausgeführt werden. Dabei ist die magnetische Ausführung erforderlich, wenn für die berührungslose Erkennung ein Hall-Sensor eingesetzt werden soll.

Die für die Kommunikation der Teileinheit mit einem zentralen Steuergerät notwendigen elektrischen Kontakte sind bevorzugt als Kontakte ausgeführt, mit denen die Teileinheit mit einem Bus verbindbar ist. Bei einem Datenbus teilen sich alle mit dem Bus verbundenen Geräte den gleichen Kabelstrang, so dass die Komplexität der Verkabelung in dem System minimiert wird.

In diesem Fall ist es bevorzugt, dass die Information, die zu der Teileinheit übertragen wird, eine Kennung für die Kommunikation über den Bus repräsentiert.

Wenn alle Teileinheiten über einen gemeinsamen Bus miteinander und mit einem Steuergerät kommunizieren, benötigt jeder Busteilnehmer eine eindeutige Kennung, um zum einen identifizierbar zu ein und zum anderen, um vom Steuergerät direkt angesprochen werden zu können. Werden beispielsweise vier Ausnehmungen vorgesehen, in die Kodiernasen eingreifen, die über verschiedene Höhen drei verschiedene Zustände einnehmen können, so ergeben sich 2 hoch 12, also 4096 Kodiermöglichkeiten

In einer weiteren Ausführungsform der Erfindung repräsentiert die zu der Teileinheit übertragene Information eine Anschlussposition in dem System, ein Funktionsmerkmal und/oder eine Korrekturinformation.

Ist der Teileinheit ihre Anschlussposition in dem System bekannt, kann diese ihre Position einem Steuergerät mitteilen, so dass das Steuergerät die von der Teileinheit gelieferten Daten korrekt zuordnen kann.

Repräsentiert die Information ein Funktionsmerkmal, kann die Teileinheit allein durch die Verbindung mit einer bestimmten Anschlussposition konfiguriert werden. Die übertragenen Funktionsmerkmale können beispielsweise bestimmte Funktionen einer Teileinheit freischalten oder beispielsweise deren Funktion konfigurieren, beispielsweise im Fall eines Sensors dessen Messreichweite festlegen, oder beispielsweise, ob der Sensor ausschließlich als Empfänger oder als Sender oder als kombinierte Sende-/Empfangseinheit eingesetzt wird.

Des Weiteren ist es in einer Variante der Erfindung denkbar, auch Korrekturinformationen zu übertragen, so dass die Teileinheit auf Besonderheiten ihres Einbauortes Rücksicht nehmen kann.

Weitere Aspekte der Erfindung betreffen Teileinheiten und Anschlusspositionen zur Verwendung in einem derartigen System.

Ein weiterer Aspekt der Erfindung betrifft ein Fahrzeug, welches ein solches System umfasst.

Dabei stellen die Anschlusspositionen diejenigen Positionen dar, in denen an dem Fahrzeug Halterungen für Sensoren angeordnet sind. Die Anschlusspositionen umfassen Kodiernasen, die jede einzelne Anschlussposition eindeutig kennzeichnen, so dass sämtliche als Teileinheiten in das System eingesetzten Sensoren zunächst identisch ausgeführt werden können, und ihre individuelle Kodierung erst durch das Einsetzen in eine Anschlussposition erhalten.

### Vorteile der Erfindung

Durch das erfindungsgemäße System wird eine einfache Möglichkeit bereitgestellt, um beispielsweise Sensoren, die alle identisch ausgeführt sind, abhängig von ihrer Einbauposition eindeutig zu kennzeichnen und/oder zu konfigurieren. Dabei ist es möglich, sämtliche Sensoren über einen gemeinsamen Datenbus mit einem Steuergerät zu verbinden, wobei die Einbauposition eines Sensors eindeutig ermittelbar ist. Die einzelnen Sensoren erhalten die Information über ihren Einbauort über die Kodierung mittels der Kodiernasen und können diese über den Datenbus an das Steuergerät weiterleiten.

Vorteilhafterweise sind zum Übertragen der Information an die Teileinheiten keine weiteren elektrischen Kontakte erforderlich. Ebenso ist es nicht erforderlich bewegliche mechanische Teile wie beispielsweise Mikroschalter an den Teileinheiten anzuordnen, die von außen zugänglich sind. Das Gehäuse der Teileinheiten kann weitestgehend geschlossen ausgeführt werden, nur die für eine Stromversorgung und für die Kommunikation über einen Datenbus erforderlichen elektrischen Kontakte müssen noch angeordnet werden.

Durch den Verzicht auf weitere elektrische Kontakte bzw. mechanische Schalter wird ein Umwelteinfluss beispielsweise durch Feuchtigkeit, Öle oder Salze, der eine Korrosion elektrischer Kontakte bewirkt, weitestgehend vermieden. Die Zuverlässigkeit der Informationsübertragung und damit des Gesamtsystems wird deutlich gesteigert.

Durch die weitestgehend geschlossene Ausführung, den Verzicht auf mechanische Schalter und die Minimierung der Anzahl der elektrischen Kontakte ist das System äußerst robust gegen Verschmutzung und Korrosion.

In den einfachsten Ausführungsvarianten, bei denen die Mittel Die Teileinheiten umfassen Mittel, mit denen diese die Anwesenheit einer Kodiernase in einer ihrer Ausnehmungen kapazitiv, induktiv oder magnetisch erfassen. Diese Mittel sind im Inneren der Teileinheit vorgesehen. Die Mittel sind beispielsweise bei einer magnetischen Erkennung als Magnetsensor, beispielsweise als Hall-Effekt-Sensor ausgestaltet. Im Fall einer kapazitiven oder induktiven Messung können diese Mittel in Form von einer um die Ausnehmung herumgeführten Leiterschleife umfassen.

### Kurze Beschreibung der Zeichnungen

Es zeigen
- Figur 1: eine schematische Darstellung einer Teileinheit,
- Figur 2: das Einsetzen einer Teileinheit in eine Anschlussposition und
- Figuren 3A und 3B: zwei Beispiele für die Anordnung von Kodiernasen in einer Anschlussposition.

In der nachfolgenden Beschreibung der Ausführungsbeispiele der Erfindung werden gleiche oder ähnliche Komponenten und Elemente mit gleichen Bezugszeichen bezeichnet, wobei auf eine wiederholte Beschreibung dieser Komponenten oder Elemente in Einzelfällen verzichtet wird. Die Figuren stellen den Gegenstand der Erfindung nur schematisch dar.

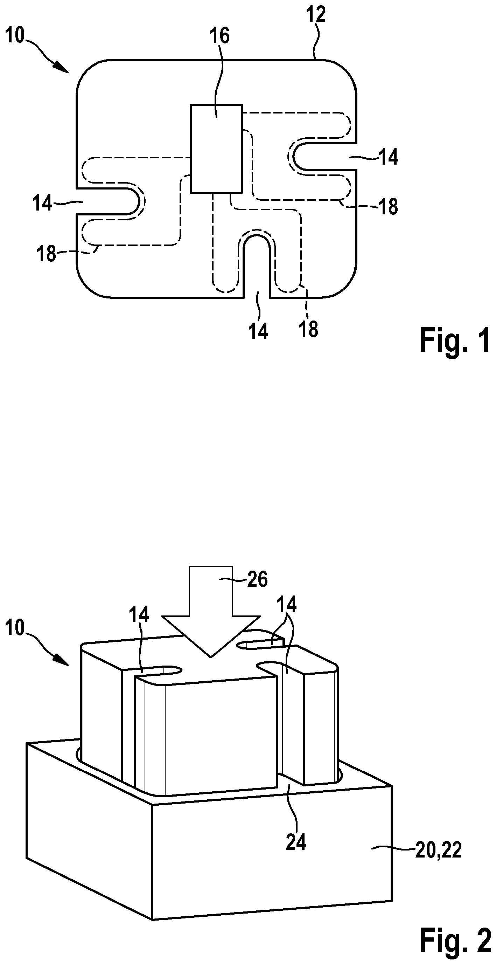

In Figur 1 ist eine Teileinheit 10 schematisch dargestellt. In der Ansicht ist die Teileinheit 10 in einer Schnittdarstellung von oben gezeigt. Die Teileinheit 10 weist ein Gehäuse 12 auf, welches eingerichtet ist, in eine Anschlussposition 20 (siehe Fig. 2) eingesetzt zu werden. Das Gehäuse 12 weist in der in Figur 1 dargestellten Ausführungsform drei Ausnehmungen 14 auf. In der Schnittdarstellung lässt sich erkennen, dass jeder Ausnehmung 14 einer Leiterschleife 18 zugeordnet ist, die mit einer Steuereinheit 16 in Verbindung steht. Die Leiterschleifen 18 sind jeweils ausgehend von der Steuereinheit 16 um eine der Ausnehmungen 14 herumgeführt.

Über die Leiterschleifen 18 kann die Steuereinheit 16 elektrische Parameter wie Kapazität oder Impedanz messen. Diese elektrischen Parameter sind abhängig davon, ob sich ein Gegenstand in der Ausnehmung 14 befindet. Wird ein Gegenstand in eine der Ausnehmungen 14 eingeführt, so ändern sich die elektrischen Eigenschaften, was wiederum über eine Änderung der Kapazität oder über eine Änderung der Impedanz gemessen werden kann. Somit kann die Steuereinheit 16 feststellen, ob sich ein Gegenstand in einer Ausnehmung 14 befindet, ohne dass ein mechanischer oder elektrischer Kontakt erfolgen muss.

In weiteren Ausführungsformen der Erfindung ist es denkbar, zusätzlich oder alternativ zu einer Leiterschleife 18 jeder Ausnehmung 14 einen Magnetsensor, beispielsweise einen Hall-Effekt-Sensor zuzuordnen. Ein solcher Sensor würde insbesondere erkennen, ob ein magnetisiertes Material in eine der Ausnehmungen 14 eingeführt wird.

Ebenso ist es in weiteren Ausführungsformen der Erfindung denkbar, eine andere Anzahl von Ausnehmungen 14 vorzusehen. Mit jeder Ausnehmung 14 kann ein logisches Bit erfasst werden, nämlich die Anwesenheit oder Abwesenheit eines Gegenstands in der Ausnehmung 14. Die Anzahl der angeordneten Ausnehmungen 14 wird daher in der Regel so gewählt, dass die benötigten Informationen kodiert werden können. Die Anzahl der kodierbaren Zustände beträgt dabei 2ⁿ, wobei n der Anzahl der Ausnehmungen 14 entspricht.

Figur 2 zeigt das Einsetzen einer Teileinheit 10 in eine Anschlussposition 20. Die Teileinheit 10 wird von oben in Richtung 26 in eine als Halterung 22 ausgeführte Anschlussposition 20 eingeführt. Die Halterung 22 weist dabei eine Kodiernase 24 auf, die beim Einsetzen der Teileinheit 10 in die Anschlussposition 20 in eine entsprechende Ausnehmung 14 der Teileinheit 10 eingreift.

Je nach Ausführungsform der Vorrichtung ist die Teileinheit 10 beispielsweise als ein Sensor zur Umfelderfassung ausgeführt und die Halterung 22 ist an dem für den Umfeldsensor bestimmten Einbauort in einem Fahrzeug angeordnet. Dabei ist es für die Fahrassistenzsysteme des Fahrzeugs wichtig zu wissen, welcher Sensor bzw. welche Teileinheit 10 in welche Anschlussposition 20 eingesetzt wurde. Werden die möglichen Anschlusspositionen 20 durch eine eindeutige Anordnung von Kodiernasen 24 in den Anschlusspositionen 20 kodiert, kann die Steuereinheit 16 einer Teileinheit 10 ihren Einbauort durch die Kodierung mittels der Kodiernasen 24 erkennen und diese Einbauposition über einen Datenbus anderen Steuergeräten im Fahrzeug mitteilen.

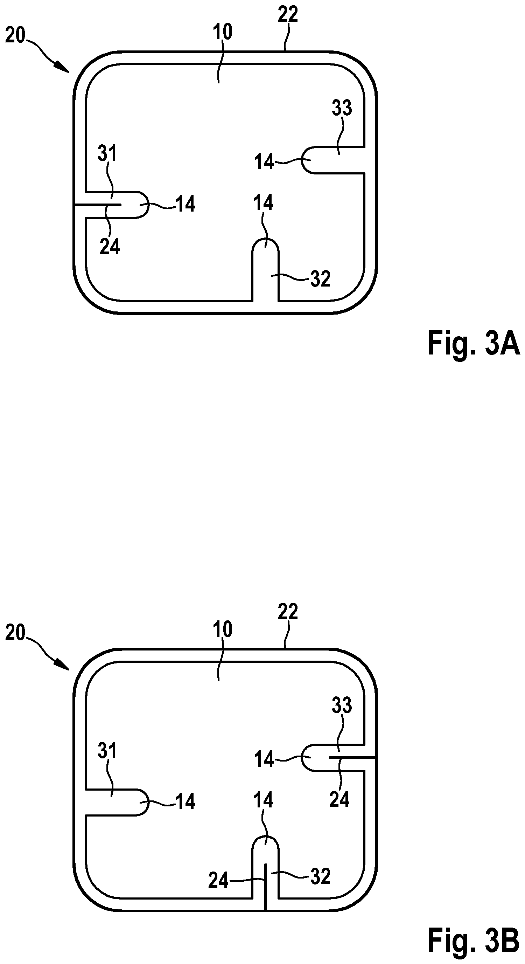

In Figur 3A und 3B sind zwei verschiedene Kodierungen einer Anschlussposition 20 dargestellt.

In Figur 3A und 3B sind jeweils als Halterung 22 ausgeführte Anschlusspositionen 20 dargestellt. In die Halterung 22 ist dabei jeweils eine Teileinheit 10 eingesetzt. Jede der Teileinheiten 10 weist in der dargestellten Ausführungsform drei Ausnehmungen 14 auf. In jede der Ausnehmungen 14 kann eine Kodiernase 24 eingreifen. Dadurch ergeben sich drei mögliche Positionen 31, 32, 33, an denen eine Kodiernase 24 angeordnet werden kann.

In der in Figur 3A dargestellten Ausführungsform befindet sich eine Kodiernase 24 an der ersten Position 31 und greift in die entsprechende Ausnehmung 14 der Teileinheit 10 ein.

In Figur 3B befindet sich jeweils eine Kodiernase 24 in der zweiten Position 32 und der dritten Position 33.

Die unterschiedliche Kodierung über die Kodiernasen 24 kann von der Teileinheit 10 berührungslos erkannt werden, indem die Anwesenheit bzw. Abwesenheit einer Kodiernase 24 in einer jeweiligen Ausnehmung 14 ermittelt wird. Aus der so erhaltenen Information kann die Teileinheit 10 beispielsweise auf ihre Einbauposition in dem System schließen. In weiteren Ausführungsformen kann diese Information zusätzlich oder alternativ eine eindeutige ID für die Kommunikation über einen Datenbus beinhalten oder beispielsweise Konfigurations- oder Korrekturinformationen an die Teileinheit 10 übermitteln. Solche Konfigurationsinformationen können beispielsweise beinhalten, dass eine als Sensor ausgeführte Teileinheit 10 an bestimmten Anschlusspositionen 20 mit anderer Messreichweite arbeiten soll als an anderen Anschlusspositionen 20.

Die Erfindung ist nicht auf die hier beschriebenen Ausführungsbeispiele und die darin hervorgehobenen Aspekte beschränkt. Vielmehr sind innerhalb des durch die Ansprüche angegebenen Bereichs eine Vielzahl von Abwandlungen möglich, die im Rahmen fachmännischen Handelns liegen.

## Patentansprüche

1. System zum Übertragen einer Information zu einer Teileinheit (10), umfassend
mindestens eine Anschlussposition (20) und mindestens eine Teileinheit (10), wobei die Anschlussposition (20) zur Aufnahme der Teileinheit (10) eingerichtet ist, **dadurch gekennzeichnet, dass** die Anschlussposition (20) mindestens eine Kodiernase (24) umfasst, die eingerichtet ist in eine entsprechende Ausnehmung (14) an der Teileinheit (10) einzugreifen, wobei die Anordnung der Kodiernase (24) die zu übertragene Information kodiert, und dass die Teileinheit (10) mindestens eine Ausnehmung (14) aufweist, die Mittel umfasst, um die Anwesenheit der Kodiernase (24) in einer Ausnehmung (14) berührungslos zu erfassen.

2. System nach Anspruch 1, **dadurch gekennzeichnet, dass** die Mittel, um die Anwesenheit der Kodiernase (24) in einer Ausnehmung (14) berührungslos zu erfassen, eine Leiterschleife und/oder einen Magnetsensor umfassen.

3. System nach Anspruch 1 oder 2, **dadurch gekennzeichnet, dass** die Anschlussposition (20) elektrische Kontakte umfasst, mit denen die Teileinheit (10) mit einem Bus verbindbar ist.

4. System nach Anspruch 3, **dadurch gekennzeichnet, dass** die Information eine Kennung für die Kommunikation über den Bus repräsentiert.

5. System nach einem der Ansprüche 1 bis 4, **dadurch gekennzeichnet, dass** die Information eine Anschlussposition (20) in dem System, ein Funktionsmerkmal und/oder eine Korrekturinformation repräsentiert.

6. System nach einem der Ansprüche 1 bis 5, **dadurch gekennzeichnet, dass** die mindestens eine Teileinheit (10) als ein Sensor ausgeführt ist und dass die mindestens eine Anschlussposition (20) als eine Halterung (22) für den Sensor ausgeführt ist.

7. System nach Anspruch 6, **dadurch gekennzeichnet, dass** die Kodiernase (24) aus dem gleichen Material wie die Halterung (22) gefertigt ist.

8. System nach einem der Ansprüche 1 bis 7, **dadurch gekennzeichnet, dass** die mindestens eine Kodiernase (24) metallisch oder magnetisch oder zusätzlich metallisch oder zusätzlich magnetisch ausgeführt ist.

9. System nach einem der Ansprüche 1 bis 8, **dadurch gekennzeichnet, dass** die Teileinheit (10) ausgewählt ist aus Ultraschallsensoren, Lidarsensoren und Radarsensoren.

10. Fahrzeug, **dadurch gekennzeichnet, dass** das Fahrzeug ein System nach einem der Ansprüche 1 bis 9 umfasst.

11. Teileinheit (10) zur Verwendung in einem System nach einem der Ansprüche 1 bis 9.

12. Anschlussposition (20) zur Verwendung in einem System nach einem der Ansprüche 1 bis 9.

## Claims

1. System for transmitting an item of information to a subunit (10), comprising
at least one connection position (20) and at least one subunit (10), the connection position (20) being set up to receive the subunit (10), **characterized in that** the connection position (20) comprises at least one coding lug (24) which is set up to engage in a corresponding recess (14) on the subunit (10), the arrangement of the coding lug (24) coding the information to be transmitted, and **in that** the subunit (10) has at least one recess (14) comprising means for contactlessly capturing the presence of the coding lug (24) in a recess (14).

2. System according to Claim 1, **characterized in that** the means for contactlessly capturing the presence of the coding lug (24) in a recess (14) comprise a conductor loop and/or a magnetic sensor.

3. System according to Claim 1 or 2, **characterized in that** the connection position (20) comprises electrical contacts which can be used to connect the subunit (10) to a bus.

4. System according to Claim 3, **characterized in that** the information represents an identifier for communication via the bus.

5. System according to one of Claims 1 to 4, **characterized in that** the information represents a connection position (20) in the system, a functional feature and/or an item of correction information.

6. System according to one of Claims 1 to 5, **characterized in that** the at least one subunit (10) is in the form of a sensor, and **in that** the at least one connection position (20) is in the form of a holder (22) for the sensor.

7. System according to Claim 6, **characterized in that** the coding lug (24) is produced from the same material as the holder (22).

8. System according to one of Claims 1 to 7, **characterized in that** the at least one coding lug (24) is metallic or magnetic or is additionally metallic or additionally magnetic.

9. System according to one of Claims 1 to 8, **characterized in that** the subunit (10) is selected from ultrasonic sensors, lidar sensors and radar sensors.

10. Vehicle, **characterized in that** the vehicle comprises a system according to one of Claims 1 to 9.

11. Subunit (10) for use in a system according to one of Claims 1 to 9.

12. Connection position (20) for use in a system according to one of Claims 1 to 9.

## Revendications

1. Système de transfert d'une information à une sous-unité (10), comprenant
au moins une position de raccordement (20) et au moins une sous-unité (10), dans lequel la position de raccordement (20) est conçue pour recevoir la sous-unité (10), **caractérisé en ce que** la position de raccordement (20) comprend au moins un bec de codage (24) qui est conçu pour s'engager dans un évidement (14) correspondant sur la sous-unité (10), dans lequel l'ensemble des becs de codage (24) code l'information à transférer et la sous-unité (10) comporte au moins un évidement (14) qui comprend des moyens destinés à détecter sans contact la présence du bec de codage (24) dans un évidement (14).

2. Système selon la revendication 1, **caractérisé en ce que** les moyens destinés à détecter sans contact la présence du bec de codage (24) dans un évidement (14) comprennent une boucle conductrice et/ou un capteur magnétique.

3. Système selon la revendication 1 ou 2, **caractérisé en ce que** la position de raccordement (20) comprend des contacts électriques au moyen desquels la sous-unité (10) peut être reliée à un bus.

4. Système selon la revendication 3, **caractérisé en ce que** l'information représente un identifiant destiné à la communication effectuée par l'intermédiaire du bus.

5. Système selon l'une des revendications 1 à 4, **caractérisé en ce que** l'information représente une position de raccordement (20) dans le système, une caractéristique fonctionnelle et/ou une information de correction.

6. Système selon l'une des revendications 1 à 5, **caractérisé en ce que** ladite au moins une sous-unité (10) est réalisée sous la forme d'un capteur et **en ce que** ladite au moins une position de raccordement (20) est réalisée sous la forme d'un support (22) destiné au capteur.

7. Système selon la revendication 6, **caractérisé en ce que** le bec de codage (24) est constitué du même matériau que le support (22).

8. Système selon l'une des revendications 1 à 7, **caractérisé en ce que** ledit au moins un bec de codage (24) est réalisé sous forme métallique ou magnétique ou en outre métallique ou en outre magnétique de façon complémentaire ou magnétique de façon complémentaire.

9. Système selon l'une des revendications 1 à 8, **caractérisé en ce que** la sous-unité (10) est sélectionnée parmi des capteurs à ultrasons, des capteurs Lidars et des capteurs radars.

10. Véhicule, **caractérisé en ce que** le véhicule comprend un système selon l'une des revendications 1 à 9.

11. Sous-unité (10) destinée à être utilisée dans un système selon l'une des revendications 1 à 9.

12. Position de raccordement (20) destinée à être utilisée dans un système selon l'une des revendications 1 à 9.
